# EUROPÄISCHE PATENTANMELDUNG

(11) **EP 2 769 617 A1**
(43) Veröffentlichungstag der Anmeldung: **27.08.2014**
(21) Anmeldenummer: 14154806.5
(22) Anmeldetag: 12.02.2014
(51) Int. Cl.: A01K 5/00, A01K 5/02

(54) **Unbemannter Futterwagen**

(30) Priorität: 20.02.2013 DE 202013001659 U
(71) Anmelder: Trioliet Holding B.V., 7575 BE Oldenzaal (NL)
(72) Erfinder: Liet, Cornelis Hendricus, 7581 PJ Losser (NL)
(74) Vertreter: Grünecker, Kinkeldey, Stockmair & Schwanhäusser

(57) **Zusammenfassung**

Die Erfindung betrifft einen unbemannten Futterwagen (1) mit einem bodengestützten Fahrwerk (2), einem Elektroantrieb (5) zum Antrieb des Fahrwerkes (2) über einen vorbestimmten Bewegungsweg (BW) und eine Stromversorgung für den Elektroantrieb (5), wobei die Stromversorgung eine den vorbestimmten Bewegungsweg (BW) folgende Stromschiene (11) mit einem mit dem Elektroantrieb (5) verbundenen Schleifkontakt (12) aufweist.

## Beschreibung

Die Erfindung bezieht sich auf einen unbemannten Futterwagen, wie er beispielsweise als Futterroboter zum Versorgen des Viehs im Stall eingesetzt wird, und zu diesem Zweck in der Stallgasse und von und zur Beladeeinrichtung, wie beispielsweise Silos oder dgl., verfahrbar sein muss.

Ein derartiger Futterwagen mit bodengestütztem Fahrwerk ist beispielsweise aus der EP 0 739 161 bekannt. Um die Energie für den Elektroantrieb dieses Futterwagens bereitzustellen, führt der Futterwagen eine Batterie an Bord. Batterien sind jedoch relativ schwer, so dass ein gewisser Kompromiss zwischen der Zeit bis zum nächsten Aufladen und dem Gewicht der Batterie getroffen werden muss. Insbesondere bei großen landwirtschaftlichen Betrieben kann die begrenzte Reichweite der Batterie ein Problem darstellen. Batterien sind weiterhin nicht unbegrenzt haltbar, wobei man mit einer mittleren Lebensdauer von etwa 3 Jahren rechnen muss. Darüber hinaus nimmt die Leistung beim Arbeiten bei tiefen Temperaturen, beispielsweise im Winter draußen (bei -20°C) sehr schnell ab. Bei dem bekannten Futterroboter ist deshalb in der Stallgasse eine Stromschiene verlegt, an der der Futterroboter seine Batterie während der Futterausgabe in der Stallgasse aufladen kann. Der Schleifkontakt ist jedoch mit der Batterie verbunden; die Nachteile der Batterie bleiben somit erhalten.

Ein weiteres Problem bei unbemannten Futterwägen mit bodengestütztem Fahrwerk ist die Navigation des Futterwagens, die sowohl robust ausgebildet als auch sicher und zuverlässig in der Funktion sein muss. Bei dem Futterwagen nach der EP 0 739 161 werden Streckenmarkierungen entlang des Bewegungsweges, der vom Futterwagen unbemannt und selbsttätig durchfahren werden soll, definiert und anlässlich einer bemannten Fahrt des Futterwagens durch den Bewegungsweg abgespeichert. Streckenmarkierungen können sich jedoch ändern und ihre Definition ist insbesondere bei einer eventuell notwendigen Fahrt über freies Gelände relativ schwierig.

Es ist weiterhin bereits aus der US-A-5 069 165 bekannt, einen unbemannten Futterwagen als Hängebahn auszubilden und entlang einer von der Decke abgehängten Schiene verfahren zu lassen. Bei dieser Ausgestaltung ist es bereits bekannt, die Stromversorgung des Futterwagens über eine Stromschiene und einen Schleifkontakt zu realisieren. Hängebahnen für Futterwagen, deren Eigengewicht, einschließlich der Ladung, durchaus etwa 1.500 bis 2.000 kg erreichen können, erfordern jedoch eine äußerst stabile Trägerkonstruktion bzw. ein äußerst stabiles Aufhängedach, die nicht überall gegeben sind.

Auch die NL-A-1033907 beschreibt einen unbemannten Futterwagen, der über Batterie oder einen Verbrennungsmotor angetrieben wird. Verbrennungsmotoren sind jedoch im Stall wegen der Abgasung und eventuell der Brandgefahr von Heu und Stroh nicht sehr erwünscht.

Schließlich zeigen die EP-A-2 124 528 und die NL-A-1033907 Navigationssysteme für Futterroboter, mit denen sich die Futterroboter selbsttätig, frei und zielgerichtet im Raum bewegen können.

Schließlich ist aus der NL-A-7901058 ein Futterroboter bekannt, der mit Hilfe von berührungslos arbeitenden Tastern einen Futterwagen immer genau mittig zu einer abgehängten Laufschiene hält.

Der Erfindung liegt die Aufgabe zugrunde, einen unbemannten Futterwagen bereitzustellen, der auf konstruktiv einfache Weise mit Antriebsenergie versorgt und/oder auf konstruktiv einfache Weise entlang eines vorbestimmten Bewegungsweges geführt wird.

Die Aufgabe wird durch die Merkmale des Anspruches 1 und/oder des Anspruches 2 gelöst.

Durch die erfindungsgemäß vorgesehene Energieversorgung kann auch ein bodengestütztes Fahrwerk problemlos und ohne Aufladepausen für eine eventuelle Batterie mit Antriebsenergie versorgt werden. Die Technik des Abgreifens der Energie über einen Schleifkontakt von einer Stromschiene ist robust, bewährt und erfindungsgemäß an bodengestützte Fahrwerke angepasst.

Die erfindungsgemäß vorgesehene Lenkeinrichtung über eine vorgegebene Lenkschiene und eine Abtasteinrichtung zum Abgreifen des vorbestimmten Bewegungsweges ist ebenfalls konstruktiv einfach und robust im Betrieb und erfindungsgemäß an bodengestützte Fahrwerke angepasst.

Bevorzugt können Lenkschiene und Stromschiene auf einem gemeinsamen Träger angeordnet sein, was die Konstruktion weiterhin vereinfacht. Werden Stromschiene und/oder Lenkschiene oberhalb des Fahrwerkes angeordnet, so befinden sie sich außerhalb des Arbeitsbereiches in der Stallgasse oder im Silo oder dgl., so dass sie den Arbeitsablauf nicht stören.

Bevorzugt erfolgt das Abgreifen des Bewegungsweges von der Lenkschiene mechanisch, und insbesondere durch einen konstanten Kontakt zwischen einem Abtastkopf und der Lenkschiene.

Wird der Abtastkopf mit dem Fahrwerk über einen schwenkbaren Lenkhebel verbunden, so sind einerseits Ausgleichsbewegungen und Ausweichbewegungen des Fahrwerkes möglich; andererseits können verschiedene Arbeits- und Bewegungsstellungen des Futterwagens, beispielsweise Kurvenfahrten oder den sogenannten "Hundegang", bei dem sich die Längsmittellinie des Futterwagens im Winkel zum Bewegungsweg stellt, trotz starrer Lenkschienen realisiert werden.

Bei einer Variante kann aber auch vorgesehen sein, an Stelle eines Lenkhebels eine einfache Zugfeder einzusetzen, die den Längenausgleich quasi automatisch sicherstellt. In die Feder oder parallel dazu kann ein Zugschalter integriert sein, der schaltet, wenn die Feder zu weit ausgezogen wird.

Bevorzugt ist der Schleifkontakt an einem der Stromschiene folgenden Wagen angeordnet, wobei zweckmäßigerweise auch der Abtastkopf an diesem Wagen angeordnet ist.

Vorteilhafte Weiterbildungen der Erfindung sind den weiteren Unteransprüchen zu entnehmen.

Ausführungsbeispiele der Erfindung werden nachfolgend anhand der Zeichnungen näher erläutert. Es zeigen:
- Fig. 1: eine schematische Seitenansicht eines Ausführungsbeispiels eines erfindungsgemäßen Futterwagens,
- Fig. 2: die Draufsicht auf den Futterwagen nach Fig. 1,
- Fig. 3: die Vorderansicht des Futterwagens nach Fig. 1,
- Fig. 4: eine herausvergrößerte Darstellung der Lenkeinrichtung eines erfindungsgemäßen Futterwagens,
- Fig. 5: eine vergrößerte, geschnittene Darstellung der Sensoreinrichtung,
- Fig. 6: eine vergrößerte Darstellung des Lenkhebels,
- Fig. 7: der Futterwagen nach Fig. 1 bei Kurvenfahrt,
- Fig. 8: ein weiteres Ausführungsbeispiel eines erfindungsgemäßen Futterwagens bei Kurvenfahrt,
- Fig. 9: der Futterwagen nach Fig. 8 in Draufsicht,
- Fig. 10: der Futterwagen gemäß Fig. 8 in Vorderansicht,
- Fig. 11: ein weiteres Ausführungsbeispiel eines erfindungsgemäßen Futterwagens bei Kurvenfahrt,
- Fig. 12: eine weitere Betriebsart des erfindungsgemäßen Futterwagens, und
- Fig. 13: eine weitere Betriebsart (Hundegang) des erfindungsgemäßen Futterwagen.

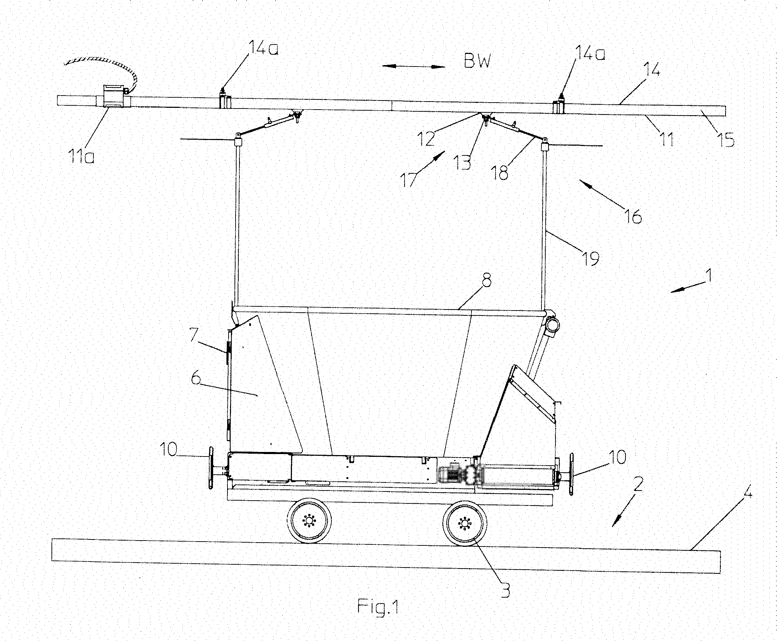

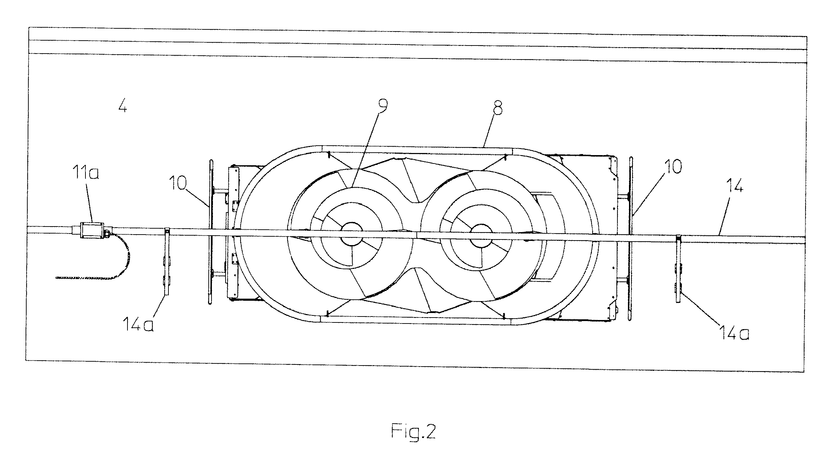

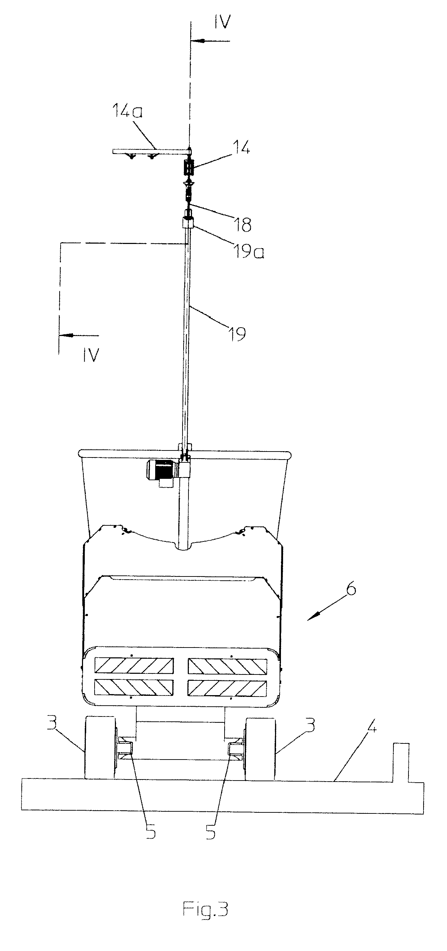

Die Fig. 1 bis 3 zeigen in verschiedenen Ansichten ein erstes Ausführungsbeispiel eines erfindungsgemäßen unbemannten Futterwagens 1, das bis auf die nachfolgend beschriebenen Einzelheiten wie ein herkömmlicher Futterwagen aufgebaut ist. Der Futterwagen 1 enthält ein bodengestütztes Fahrwerk 2, das hier vier gelenkte Räder 3, die paarweise gegenüber und hintereinander angeordnet sind und auf einem Untergrund 4, beispielsweise in der Stallgasse oder im Silobereich, abrollen können. Der Futterwagen 1 wird über einen Elektroantrieb 5 angetrieben. Im dargestellten Ausführungsbeispiel sind alle vier Räder 3 mit Einzelantrieben in Form von Radmotoren einzeln und unabhängig voneinander antreibbar (Fig. 3). Die Radmotoren sind mit einer Signalverarbeitungs- und Steuereinrichtung 6 verbunden, die über einen nicht gezeigten Computer betätigbar ist.

Der Computer befindet sich bevorzugt außerhalb des Futterwagens und ist mit diesem über Kabel oder kabellos verbunden. Am Futterwagen 1 kann sich weiterhin ein Bedienpaneel 7 befinden. Über die Steuereinrichtung 6 kann die Antriebsgeschwindigkeit und/oder die Drehzahl einzelner Räder 3 in programmierbarer Weise gesteuert werden.

Der Futterwagen 1 enthält weiterhin den üblichen, hier langoval ausgebildeten, Behälter 8, in dem üblicherweise eine nicht gezeichnete oder nur angedeutete Mischeinrichtung 9 untergebracht ist. Es können weiterhin Sicherheitseinrichtungen, wie beispielsweise Stoßstangen 10 mit Notabschaltung vorgesehen sein.

Der Elektroantrieb 5 des Futterwagens 1 wird mit Hilfe einer Stromschiene 11, die über einen Stromanschlusskasten 11a verfügt, und wenigstens einer Schleifkontakteinrichtung 12 mit Antriebsenergie versorgt. Der Schleifkontakt 12 ist an einem Wagen 13 angeordnet, der vom Futterwagen 1 in einer nachstehend noch zu beschreibenden Weise an der Stromschiene 11 in einem vorbestimmten Bewegungsweg BW entlang bewegt wird. Von der Schleifkontakteinrichtung 12 führt eine elektrische Verbindungsleitung direkt zum Elektroantrieb 5, d.h. der Elektroantrieb 5 wird über ein Elektrokabel 11 b direkt vom Schleifkontakt 12 mit elektrischer Energie versorgt.

Die Stromschiene 11 ist an einem Träger 14 befestigt, der ihr die nötige mechanische Festigkeit verleiht und der sich entlang des vorbestimmten Bewegungsweges BW erstreckt. Der Träger 14 ist oberhalb des Futterwagens 1 und seines Fahrwerkes 2 angeordnet und, z.B. mittels einer Aufhängung 14a, entweder an der Decke oder an anderen geeigneten Stellen, wie beispielsweise Stützen, so befestigt, dass er dem vorbestimmten Bewegungsweg BW folgt. Da der Futterwagen 1 bodengestützt ist, muss der Träger 14 im Wesentlichen nur sein Eigengewicht tragen, so dass die statischen Anforderungen an die Festigkeit der Verankerungspunkte gering sind.

Der Träger 14 weist weiterhin eine Lenkfläche 15 auf, die sich ebenfalls entlang des vorbestimmten Bewegungsweges BW erstreckt. Die Lenkfläche 15 dient der Führung einer Lenkeinrichtung 16 für den Futterwagen 1. Die Lenkeinrichtung 16 enthält eine Abtasteinrichtung 17 mit einem Abtastkopf, der an der Lenkschiene 15 in direktem Kontakt anliegt und somit den Verlauf des vorbestimmten Bewegungsweges BW an der Lenkschiene 15 abgreift. Dabei stützt sich der Wagen 13 über Stützräder 13a in einem Profil des Trägers 14 so ab, dass entweder wenigstens eines der Stützräder 13a oder ein gesondertes Führungsrad (nicht gezeigt) an der Lenkfläche 15 permanent anliegt. Gleichzeitig werden Kräfte in allen Richtungen aufgenommen.

Im bevorzugten Ausführungsbeispiel ist der Wagen 13, der den Schleifkontakt 12 trägt, gleichzeitig als Abtastkopf ausgebildet.

Die Abtasteinrichtung 17 enthält weiterhin einen Lenkhebel 18, der schwenkbar sowohl mit dem Abtastkopf am Wagen 13 als auch an einer Trägerstange 19 angelenkt ist, die, gegebenenfalls über Zwischenbauteile, fest mit dem Fahrwerk 2 verbunden ist und alle Bewegungen des Fahrwerkes 2 auf den Lenkhebel 18 übertragen kann. Die Anlenkpunkte 18a, 18b des Lenkhebels 18 am Wagen 13 einerseits und an der Tragstange 19 andererseits haben sowohl einen vertikalen als auch einen horizontalen Abstand zueinander, wenn die Räder 3 auf dem Boden 4 stehen. Die Anlenkpunkte sind weiterhin so ausgebildet, dass sie eine Verschwenkbewegung des Lenkhebels 18 sowohl in einer vertikalen als auch in einer horizontalen und allen dazwischenliegenden Ebenen gestatten, zumindest über diejenigen Winkelbereiche, in denen eine solche Relativbewegung im Betrieb überhaupt auftreten kann.

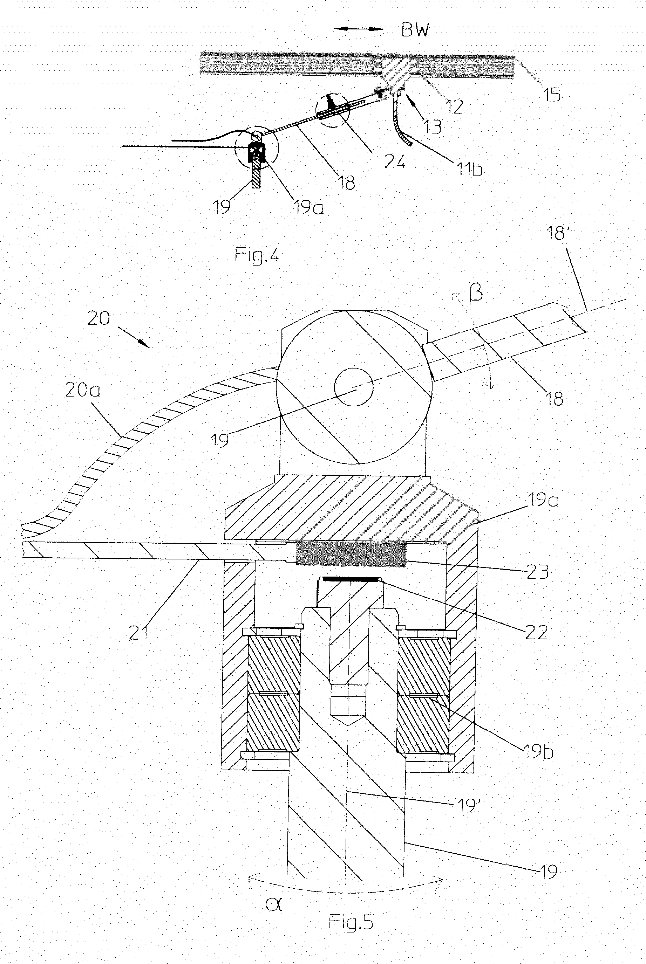

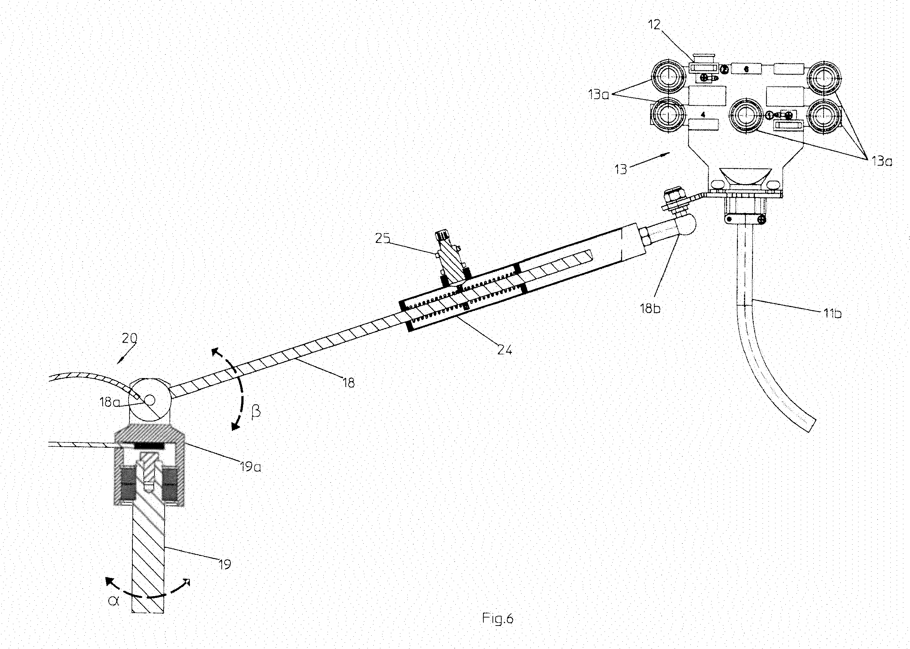

Die Relativbewegungen zwischen dem Lenkhebel 18 und der Trägerstange 19 werden durch eine Sensoreinrichtung 20 (Fig. 4 bis 6) überwacht. Die Sensoreinrichtung 20 enthält bevorzugt berührungslos arbeitende Sensoren, um sowohl einen Drehwinkel α der Lenkstange 18 um die Längsmittellinie 19' der Tragstange 19 als auch einen vertikalen Schwenkwinkel β zwischen den Längsmittellinien 18', 19' der Lenkstange 18 und der Tragstange 19 festzustellen. Die Bestimmung des Schwenkwinkels β (Neigungswinkel) erfolgt im Bereich einer Anlenkstelle 18a des Lenkhebels 18 an einer Drehhülse 19a, die über ein Lager 19b drehbar an aber axial unverschiebbar auf dem stirnseitigen, oberen Ende der Tragstange 19 sitzt. Die Bestimmung des Schwenkwinkels β dient vorrangig der Sicherheit, und bewirkt eine Notabschaltung, wenn das Fahrwerk 2 beispielsweise auf ein Hindernis auffährt, und den Futterwagen 1 somit anhebt, oder über eine Kante kippt, und den Futterwagen 1 somit absenkt. Die Bestimmung und Überwachung dieses Schwenkwinkels ist jedoch auch bei Anstiegen bzw. Gefällen im vorbestimmten Bewegungsweg sinnvoll. Als Winkelsensor für den Schwenkwinkel β kann jeder geeignete Sensor, beispielsweise auf Magnetbasis oder dgl. eingesetzt werden. Die mittels einer Signal- und Versorgungsleitung 20a angeschlossene Steuerung 6 definiert einen Toleranzbereich für den Winkel β, der im Hinblick auf problemlos vom Futterwagen gemeisterte Unebenheiten im Gelände oder Schwankungen im Lenkverhalten tolerierbar ist und z.B. keinen Eingriff der Steuereinrichtung oder gar keine Notabschaltung erfordert. Darüber hinaus unterstützt die Bestimmung des Schwenkwinkels β Gefälle- und Anstiegsfahrten.

Der Drehwinkel α definiert das eigentliche Lenkverhalten, d.h. den horizontalen Abstand der Projektion der Führungsschiene 15 und dem Fahrwerk 2 bezogen auf die Lage der beiden Anlenkpunkte 18a, 18b des Lenkhebels 18 an der Drehhülse 19a bzw. dem Wagen 13 quer zum Bewegungsweg BW. Der Drehwinkel α wird durch einen geeigneten Sensor 21, z.B. einen Magnetsensor, überwacht, der durch einen fest mit der Tragstange 19 verbundenen Magneten 22 und einen Geber 23 gebildet wird, der fest mit der Drehhülse 19a verbunden ist. Die Signale vom Sensor 21 werden über die Signalleitung 20a oder drahtlos an die Steuereinrichtung 6 und/oder den Computer übermittelt. Der Drehwinkel α definiert den Winkel zwischen dem Lenkhebel 18 und dem Bewegungsweg BW.

In der Steuereinrichtung oder im Computer werden Drehwinkel abgespeichert, die verschiedenen Betriebszuständen entsprechen und während dieser Betriebszustände konstant gehalten werden müssen, um den Futterwagen 1 auf dem vorbestimmten Bewegungsweg zu halten. Diese Betriebszustände werden z.B. durch manuelle Probefahrten definiert, wobei die während dieser "Einlernfahrt" produzierten Daten mit einer geeigneten Software routine-gespeichert und bei jeder unbemannten Fahrt kopiert werden.

Als weiteres Sicherheitsmerkmal enthält der Lenkhebel 18 ein Längenausgleichssystem 24, das einerseits die vom Lenkhebel 18 aufzunehmenden Kräfte begrenzt und somit dessen Beschädigung verhindert, wenn sich der Futterwagen 1 aus den gestatteten Lenkungsbereichen hinausbewegt, und andererseits dafür sorgt, dass die Steuerung Zeit bekommt, um korrigierend eingreifen zu können, um eine gewollte Lenkungsaktion oder eine Sicherungsaktion in die Wege zu leiten. Auch das Längenausgleichssystem 24 ist mit einer Notabschaltung 25 ausgerüstet. Zu diesem Zweck ist der Lenkhebel 18, durch eine Feder 24a belastet, teleskopisch längenveränderlich ausgebildet, wobei der Kontakt des Schalters 25 unterbrochen wird, wenn die Längenveränderung ein akzeptables Maß übersteigt. Diese Ergebnis könnte man auch mit einer Variante erreichen, bei der der Lenkhebel insgesamt durch eine Zugfeder mit integriertem Zugschalter ersetzt ist. Eine solche Feder erlaubt mehr Flexibilität und verwirklicht den Längenausgleich automatisch.

Für den Betrieb des Futterwagens 1 wird der Drehwinkel α, insbesondere ein Toleranzbereich des Drehwinkels α und gegebenenfalls auch der Schwenkwinkel β bzw. ein Toleranzbereich des Schwenkwinkels β festgelegt, die konstant gehalten werden müssen, wenn sich der Futterwagen 1 auf dem vorbestimmten Bewegungsweg befindet. Weicht einer der Winkel, festgestellt durch die Sensoreinrichtung 20, in unakzeptabler Weise vom Drehwinkel α bzw. Schwenkwinkel β ab, so leitet die Steuerung eine korrigierende Lenkbewegung im Fahrwerk 2 ein, beispielsweise durch einen definierten Lenkeinschlag des oder der gelenkten Räder 3 oder durch Änderung der Drehzahl einzelner Räder oder durch andere Maßnahmen. Auf diese Weise gelingt es auf konstruktiv einfache und zuverlässige Weise, den Futterwagen 1 auf dem vorbestimmten Bewegungsweg zu halten.

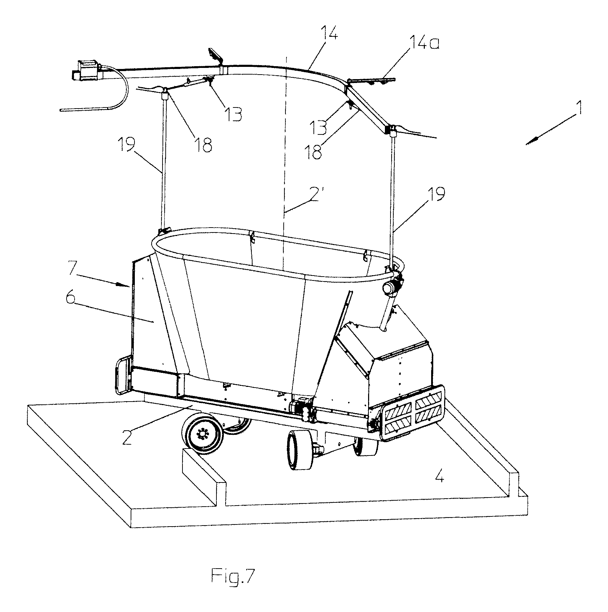

Zur Erleichterung von Kurvenfahrten ist es zweckmäßig, die Lenkhebel 18 so anzuordnen, dass der Wagen 13 möglichst nahe der senkrechten Mittellinie 2' des Fahrwerkes 2 liegt. Im Falle des in Fig. 1 und Fig. 7 dargestellten langgestreckten Fahrwerkes, sind weiterhin zwei Tragstangen 19, zwei Lenkhebel 18 und zwei Wagen 13 sinnvoll, die in der senkrechten Mittelebene liegen und spiegelbildlich zur Mittellinie 2' angeordnet sind, und zwar so, dass die Wagen 13 nach innen zur Mittellinie 2' weisen. Auf diese Weise sind mit zwei gelenkten Radpaaren, wie in Fig. 7 ersichtlich, Kurvenfahrten problemlos möglich, wobei darauf geachtet werden sollte, dass die senkrechte Mittellinie 2' nahe am Träger 14 liegt oder sich durch ihn hindurcherstreckt. Weiterhin sollte der Lenkhebel 18 so positioniert werden, dass er parallel zur Radstellung verläuft, den Lenkeinschlag der Räder 3 somit anzeigt.

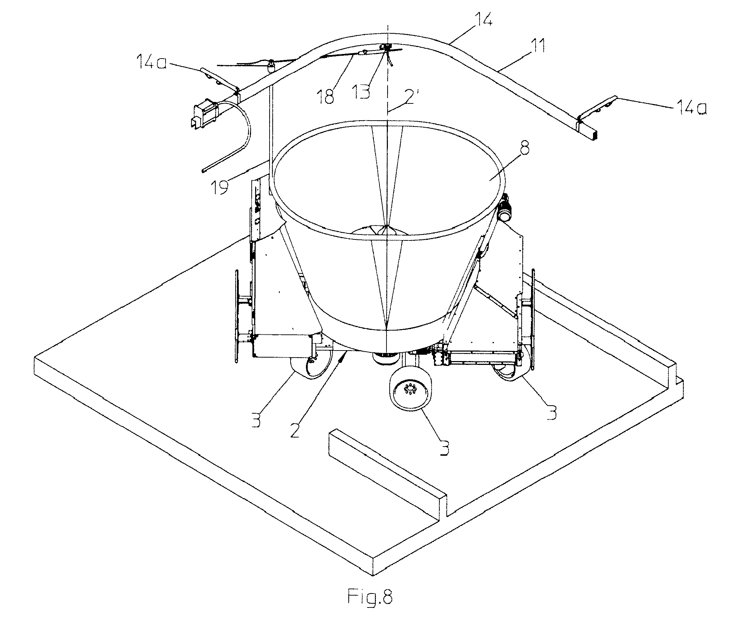

Bei kleineren Behältern 8, bei denen eine einzige Tragstange 19 und ein einziger Lenkhebel 18 sowie ein einziger Wagen 13 ausreichen, sollte jedoch der Wagen 13 wiederum so nahe wie möglich an der senkrechten Mittellinie 2' des Fahrwerkes 2 bleiben. In Fig. 8 wird dies durch ein Fahrwerk mit vier einzeln lenkbaren Rädern 3 gelöst, die kreuzweise im gleichen Abstand zueinander angeordnet sind.

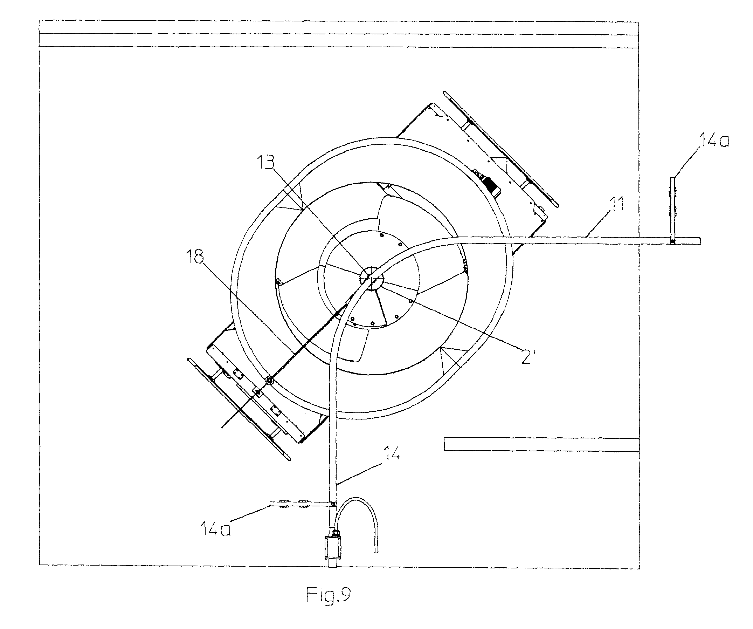

Fig. 9 verdeutlicht die Anordnung des Wagens 13 in der senkrechten Mittellinie 2', was eine äußerst präzise Kurvenfahrt ermöglicht.

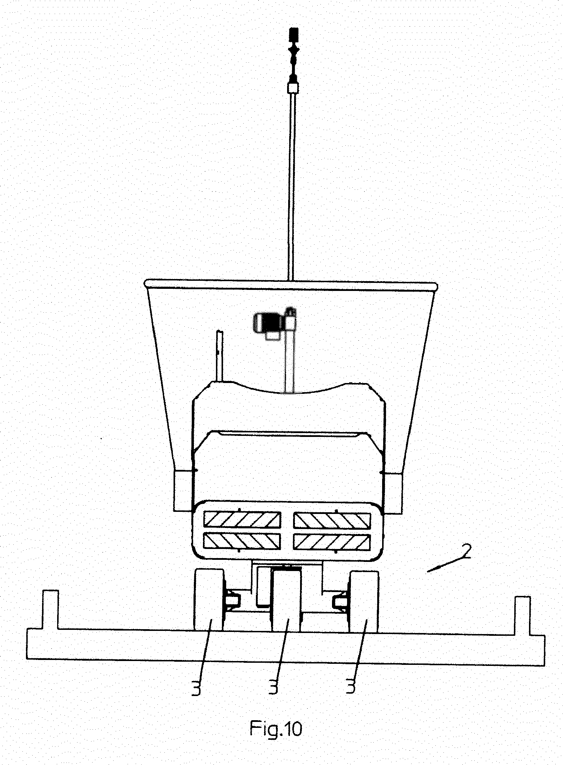

Fig. 10 zeigt den Futterwagen nach den Fig. 8 und 9 bei Geradeausfahrt, wobei das Fahrwerk 2 sich seitlich gegenüberliegende und zwei mittig jeweils vor- und nachlaufende Räder 3 aufweist.

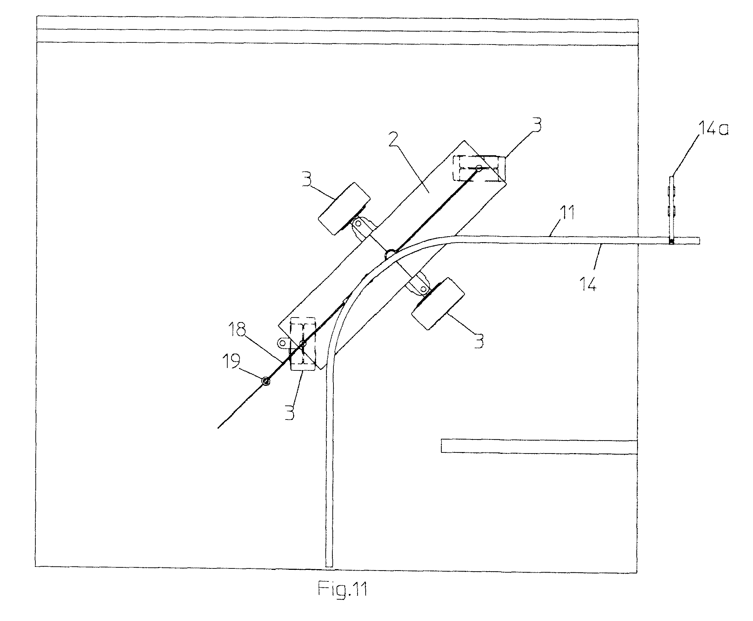

Fig. 11 zeigt die Kurvenfahrt eines langgestreckten Behälters 8 mit langgestrecktem Fahrwerk 2, jedoch mit der Anordnung der Räder gemäß den Fig. 8 bis 10, wobei jedoch der Abstand zwischen den beiden paarweise nebeneinanderliegenden Rädern und den vor- bzw. nachlaufenden Rädern unterschiedlich ist (der Radabstand quer zu BW ist kleiner).

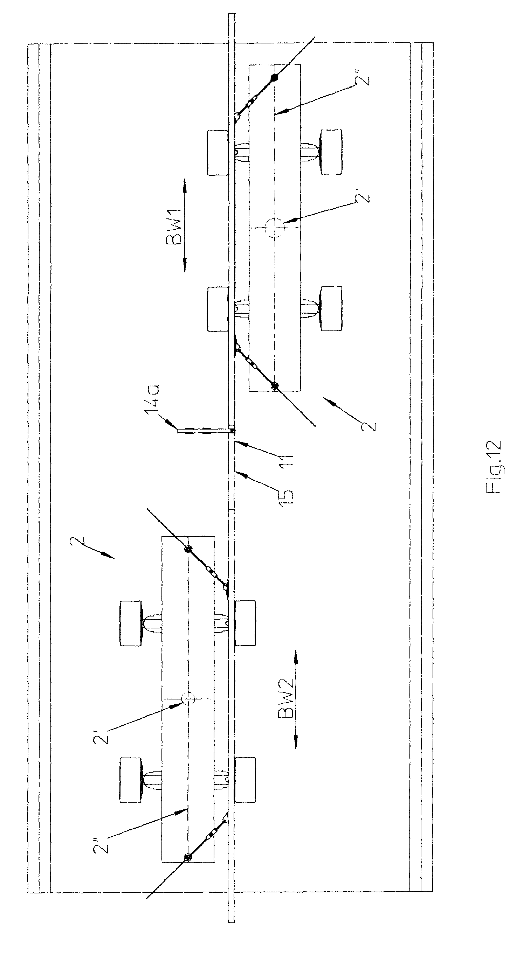

Wie Fig. 12 zeigt, können pro Fahrwerk 2 (bzw. Futterwagen 1) zwei verschiedene Drehwinkel α bzw. Drehwinkelbereiche definiert werden, die um etwa 90° zueinander versetzt sind. Auf diese Weise ist es möglich, ein- und dasselbe Fahrwerk 2 mit einem einzigen Träger 14 und bevorzugt einer einzigen Lenkschiene 15 bzw. Stromschiene 11 auf zwei verschiedenen Bewegungswegen BW1 und BW2, parallel zueinander, verfahren zu lassen. Allerdings muss hier vom Grundsatz abgewichen werden, das Fahrwerk 2 mit seiner senkrechten Mittellinie 2' unterhalb der Trägerschiene 14 verfahren zu lassen. Vielmehr sind hier die senkrechte Mittellinie 2' und die Längsmittellinie 2" der Fahrwerke 2 gegenüber dem Träger 14 in horizontaler Richtung versetzt.

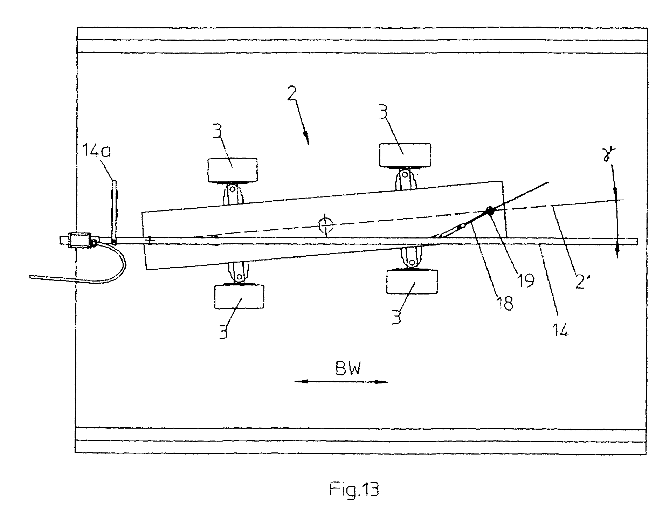

Fig. 13 zeigt, dass die Erfindung auch anwendbar ist, wenn der Futterwagen 1 im sogenannten "Hundegang" betrieben wird, d.h. die Längsmittellinie 2" seines Fahrwerkes 2 in einem Winkel γ zur vorbestimmten Bewegungsrichtung BW verläuft. In dieser Betriebsweise wird der Futterwagen 1 verfahren, wenn es notwendig oder wünschenswert ist, eine seiner Seiten näher an die seitlich positionierten Fütterstellen an der Stallgasse zu positionieren. Auch für diese Betriebsweise kann ein Drehwinkel α bzw. ein Drehwinkelbereich definiert und abgespeichert werden, der während der Fahrt eingehalten werden muss.

In Abwandlung der beschriebenen und gezeichneten Ausführungsbeispiele können anhand der einzelnen Zeichnungen dargestellte Einzelheiten untereinander ausgetauscht werden. So können in jedem der dargestellten Ausführungsbeispiele jeweils ein oder jeweils zwei Lenkhebel oder aber auch einfache Zugfedern eingesetzt werden. Auch die verschieden gelenkten und ausgestalteten Fahrwerke können untereinander ausgetauscht werden.

Insbesondere ist es auch denkbar, statt einem Fahrwerk mit 4 Rädern ein solches mit drei Rädern einzusetzen. Dabei können zwei auf einer Ebene hinten antreibende Räder zum Einsatz kommen und vorne nur ein einfaches, nicht angetriebenes Schwenk-Stützrad. Die beiden Hinterräder können jeweils einzeln antreibbar sein. Das Lenken erfolgt dann indirekt über das Antreiben dieser beiden Räder mit unterschiedlichen Drehzahlen. Andererseits wäre es bei einem mit nur drei Rädern verwirklichten Fahrwerk auch möglich, nur das vordere Rad anzutreiben und zu lenken, und die beiden hinteren als einfache Laufräder zu verwirklichen, aber auch das Lenken und Antreiben aller 3 Räder ist denkbar.

Als Winkelsensoren können alle bekannten Konstruktionsprinzipe eingesetzt werden. Auch kann beispielsweise eine (Notstrom)-Batterie an Bord mitgeführt werden, damit der Futterwagen auch ohne Schiene bewegbar bleibt. Eine Batterie oder ein Verbrennungsmotor mit einem geeigneten Dynamo oder eine andere Stromquelle wäre auch für eine temporäre Stromversorgung sinnvoll, wenn der Futterwagen außerhalb des Bereiches der Stromschiene verfahren werden muss, z.B. zwischen örtlich getrennten Einsatzorten oder zum Parken/Abstellen oder dgl..

## Patentansprüche

1. Unbemannter Futterwagen (1) mit einem bodengestützten Fahrwerk (2), einem Elektroantrieb (5) zum Antrieb des Fahrwerkes (2) über einen vorbestimmten Bewegungsweg (BW) und eine Stromversorgung für den Elektroantrieb (5), wobei die Stromversorgung eine den vorbestimmten Bewegungsweg (BW) folgende Stromschiene (11) mit einem mit dem Elektroantrieb (5) verbundenen Schleifkontakt (12) aufweist.

2. Unbemannter Futterwagen, insbesondere nach Anspruch 1, **gekennzeichnet durch** eine Lenkeinrichtung (16), die eine den Bewegungsweg (BW) vorgegebene Lenkschiene (15) und eine Abtasteinrichtung (17) zum Abgreifen des vorbestimmten Bewegungsweges (BW) zum Lenken des Fahrwerkes (2) aufweist.

3. Unbemannter Futterwagen nach Anspruch 1 und 2, **dadurch gekennzeichnet, dass** die Lenkschiene (15) und die Stromschiene (11) auf einem gemeinsamen Träger (14) angeordnet sind.

4. Unbemannter Futterwagen nach einem der Ansprüche 1 bis 3, **dadurch gekennzeichnet, dass** die Stromschiene (11) oberhalb des Fahrwerkes (2) angeordnet ist.

5. Unbemannter Futterwagen nach einem der Ansprüche 1 bis 4, **dadurch gekennzeichnet, dass** die Lenkschiene (15) oberhalb des Fahrwerkes (2) angeordnet ist.

6. Unbemannter Futterwagen nach einem der Ansprüche 2 bis 5, **dadurch gekennzeichnet, dass** die Abtasteinrichtung (17) den vorbestimmten Bewegungsweg (BW) mechanisch abgreift.

7. Unbemannter Futterwagen nach einem der Ansprüche 1 bis 6, **dadurch gekennzeichnet, dass** die Abtasteinrichtung (17) einen Abtastkopf (13) aufweist, der in konstantem mechanischen Kontakt mit der Lenkschiene (15) steht.

8. Unbemannter Futterwagen nach Anspruch 7, **dadurch gekennzeichnet, dass** die Abtasteinrichtung (17) einen mit dem Abtastkopf (13) und dem Fahrwerk (2) jeweils schwenkbar verbundenen Lenkhebel (18) und eine Sensoreinrichtung (20) zum Überwachen eines Winkels (α, β) zwischen dem vorbestimmten Bewegungsweg (BW) und dem Lenkhebel (18) aufweist.

9. Unbemannter Futterwagen nach Anspruch 8, **dadurch gekennzeichnet, dass** die Sensoreinrichtung (20) einen vorzugsweise berührungslos arbeitenden Sensor (21) zum Feststellen einer horizontalen Abweichung des Fahrwerkes (2) vom vorbestimmten Bewegungsweg (BW) aufweist.

10. Unbemannter Futterwagen nach Anspruch 7 oder 8, **dadurch gekennzeichnet, dass** die Sensoreinrichtung (20) einen vorzugsweise berührungslos arbeitenden Neigungssensor zum Feststellen einer vertikalen Abweichung des Fahrwerkes (2) vom vorbestimmten Bewegungsweg (BW) aufweist.

11. Unbemannter Futterwagen nach einem der Ansprüche 8 bis 10, **dadurch gekennzeichnet, dass** die Sensoreinrichtung (20) einen Magnetgeber (22, 23) aufweist.

12. Unbemannter Futterwagen nach einem der Ansprüche 1 bis 11, **dadurch gekennzeichnet, dass** der Schleifkontakt (12) an einem der Stromschiene (11) folgenden Wagen (13) angeordnet ist.

13. Unbemannter Futterwagen nach Anspruch 12, **dadurch gekennzeichnet, dass** der Wagen (13) als Abtastkopf der Abtasteinrichtung (17) ausgebildet ist.

14. Unbemannter Futterwagen nach einem der Ansprüche 8 bis 13, **dadurch gekennzeichnet, dass** der Lenkhebel (18) so bemessen und angeordnet ist, dass der Abtastkopf (13) im Wesentlichen senkrecht oberhalb der in Richtung des Bewegungsweges (BW) verlaufenden Längsmittellinie (2") des Fahrwerkes (2) angeordnet ist.

15. Unbemannter Futterwagen nach einem der Ansprüche 8 bis 14, **dadurch gekennzeichnet, dass** der Lenkhebel (18) eine Längenausgleichseinrichtung (24) enthält.

16. Unbemannter Futterwagen nach einem der Ansprüche 2 bis 12, **dadurch gekennzeichnet, dass** für jedes Fahrwerk (2) wenigstens zwei im Abstand zueinander entlang des vorbestimmten Bewegungsweges (BW) angeordnete Abtasteinrichtungen (17) vorgesehen sind.

17. Unbemannter Futterwagen nach einem der Ansprüche 1 bis 16, **dadurch gekennzeichnet, dass** die Lenkeinrichtung (16) eine Notabschaltung aufweist.

18. Unbemannter Futterwagen nach einem der Ansprüche 1 bis 17, **dadurch gekennzeichnet, dass** das Fahrwerk (2) wenigstens ein lenkbares Rad (3) aufweist, das über eine Signalverarbeitungseinrichtung mit der Lenkeinrichtung (16) verbunden ist.

19. Unbemannter Futterwagen nach einem der Ansprüche 1 bis 18, **dadurch gekennzeichnet, dass** das Fahrwerk (2) vier lenkbare Räder (3) aufweist, die über eine Signalverarbeitungseinrichtung mit der Lenkeinrichtung (16) verbunden sind.

20. Unbemannter Futterwagen nach Anspruch 18 oder 19, **dadurch gekennzeichnet, dass** die Lenkeinrichtung (16) derart ausgebildet ist, dass der Lenkhebel (18) die Stellung wenigstens eines lenkbaren Rades (3) anzeigt.

21. Unbemannter Futterwagen nach einem der Ansprüche 2 bis 20, **dadurch gekennzeichnet, dass** die Lenkeinrichtungen (16) eine Steuereinrichtung (6) aufweist.

22. Unbemannter Futterwagen nach Anspruch 21, **dadurch gekennzeichnet, dass** die Steuereinrichtung (6) programmierbar ist.

23. Unbemannter Futterwagen nach Anspruch 22, **dadurch gekennzeichnet, dass** die Steuereinrichtung (6) für Sonderaufgaben, insbesondere Seitwärtsbewegungen quer zum Bewegungsweg (BW), programmierbar ist.

24. Unbemannter Futterwagen nach einem der Ansprüche 1 bis 23, **dadurch gekennzeichnet, dass** der Elektroantrieb (5) Radmotoren zum unabhängigen Antrieb einzelner Räder (3) aufweist.

25. Unbemannter Futterwagen nach einem der Ansprüche 21 bis 24, **dadurch gekennzeichnet, dass** über die Steuereinrichtung (6) die Drehzahl einzelner Räder (3) unabhängig voneinander steuerbar ist.

26. Unbemannter Futterwagen nach Anspruch 25, **dadurch gekennzeichnet, dass** das Fahrwerk auf drei Rädern läuft, von denen zwei hinten liegende Räder mit unterschiedlichen Drehzahlen zum Lenken antreibbar sind und vorne ein einfaches, nichtangetriebenes, Schwenkstützrad vorgesehen ist.

27. Unbemannter Futterwagen nach einem der Ansprüche 1 bis 25, **gekennzeichnet durch** eine zweite, temporäre Stromquelle.
